Europäisches Patentamt

European Patent Office

Office européen des brevets

(11) Publication number: **0 208 880**
**B1**

(12) **EUROPEAN PATENT SPECIFICATION**

(45) Date of publication of patent specification: 27.09.89

(51) Int. Cl.⁴: **F 16 C 33/76**

(21) Application number: **86107128.0**

(22) Date of filing: **25.05.86**

(54) A sealing assembly, particularly for bearings.

(30) Priority: **21.06.85 IT 5353185 u**

(43) Date of publication of application:
**21.01.87 Bulletin 87/04**

(45) Publication of the grant of the patent:
**27.09.89 Bulletin 89/39**

(84) Designated Contracting States:
**DE FR GB SE**

(56) References cited:
**DE-A-3 009 977**
**DE-B-1 169 214**
**US-A-3 245 735**

**PATENT ABSTRACTS OF JAPAN, vol. 3, no. 16
(M-48), 10th February 1979, page 56 M 48; & JP
- A - 53 140 443 (NIPPON SEIKO) 07-12-1978**

(73) Proprietor: **RIV-SKF OFFICINE DI VILLAR
PEROSA S.p.A
Via Mazzini 53
I-10123 Torino (IT)**

(72) Inventor: **Colanzi, Franco
Piazza Rivoli, 6
I-10100 Torino (IT)**
Inventor: **Vignotto, Angelo
Via Montevideo, 6
I-10100 Torino (IT)**

(74) Representative: **Boggio, Luigi et al
c/o Ingg. Carlo e Mario Torta Via Viotti, 9
I-10121 Torino (IT)**

EP 0 208 880 B1

Courier Press, Leamington Spa, England.

## Description

The present invention relates to a sealing assembly of improved type, particularly one able to be used on rolling element bearings.

Sliding lip sealing assemblies used on rolling element bearings, such as e.g. those shown in the U.S. Patent Specification No. 3,245,735, have the disadvantage of having an efficiency which is a function of the precision of mounting of the assembly in its seating formed on the bearing rings, and on the degree of constructional precision of the seatings themselves. In fact, in the majority of such assemblies, the seal is effected by one or more sliding lips of a rubber element, which cooperatively interfere with the surfaces of the seating and the sealing assembly in such a way as to be elastically deformed and consequently to exert on the said surfaces a pressure sufficient to guarantee the seal; it is evident that if the mounting is not correct and if the seat is not constructed in a precise manner the interference between the sliding lips and the surfaces of the seating will not achieve the design value with the consequence that there will be either a reduction in the sealing efficiency (interference less than the design interference) or an unwanted increase in the rolling friction between the bearing rings due to the sliding lips (interference greater than the design value).

The object of the invention is that of providing a sealing assembly of the sliding lip type the sealing efficiency and the operating friction of which shall be independent of the precision of mounting the sealing assembly in its seating and on the constructional precision with which the seating itself is produced.

The said object is achieved by the invention in that it relates to a sealing assembly, in particular for a rolling element bearing, interposable between two members which are relatively rotatable with respect to one another, to ensure the fluid-tight sealing of the annular space lying between them, comprising a substantially rigid support element and an annular elastomeric sealing element provided with a radially inner annular lip extending radially and axially and projecting from an annular root portion of the said elastomeric element, said annular lip having radial section formed substantially as a V having its vertex disposed obiquely with respect to the axis of the said elastomeric element and being subdivided into a first and a second body portion able to cooperate with respective sealing surfaces on one of the said members, characterized in that the said annular lip includes two portions of reduced thickness a first of which is formed in correspondence with the said root portion, and a second of which is formed in correspondance with the said vertex of the V, the said portions of reduced thickness subdiving said annular lip into said two body portions and having a flexibility such as to connect the said body portions together and to the said root portion substantially as elastic hinges.

For a better understanding of the invention there is now given a non-limitative description of an exemplary embodiment, with reference to the attached drawings, in which:

Figure 1 illustrates in section a portion of a rolling element bearing provided with the sealing assembly according to the invention; and

Figure 2 illustrates, on an enlarged scale, a detail of the sealing assembly of Figure 1.

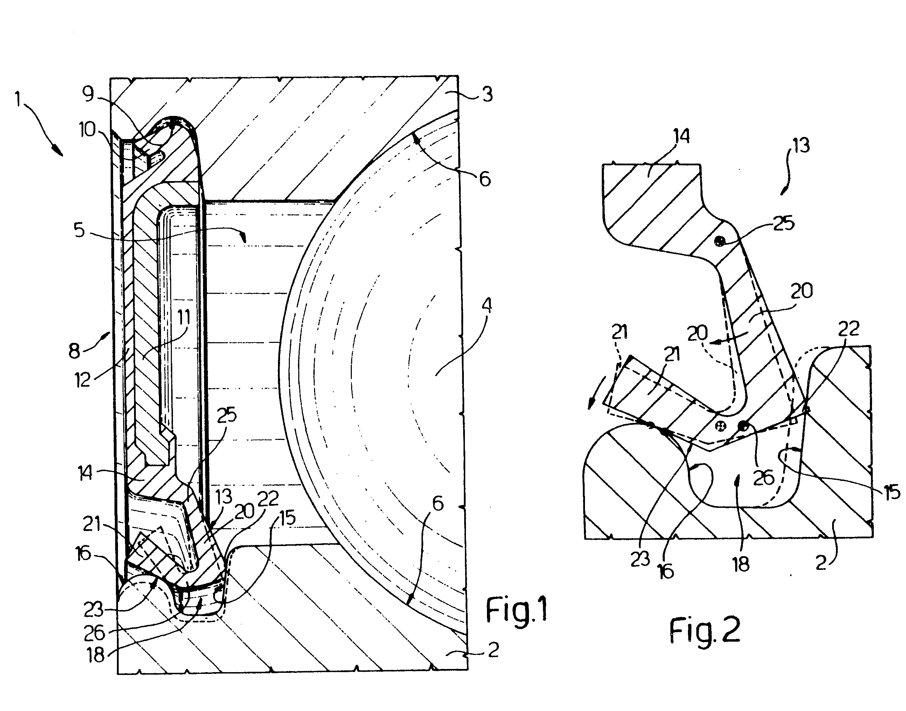

With reference to Figure 1 there is generally indicated with the reference numeral 1, a rolling element bearing of known type comprising a inner ring 2, an outer ring 3, and a plurality of rolling bodies 4 interposed between the rings 2 and 3 with an annular space 5 lying between them, and rolling in respective tracks 6 of the rings 2 and 3 in such a way as to make these latter capable of rotating relative to one another with low friction; the annular space 5 is provided with an external fluid tight seal by a sealing assembly 8 snap-fitted into a seat 9 of the outer ring 3 by means of an elastic lip 10 of known type, and comprising a substantially rigid support and reinforcement element 11, preferably made of metal or plastics material, and an elastomeric sealing element 12 rigidly mounted on the element 11, which is preferably moulded together with the elastomeric element 12 or in any case fixed intimately and securely to this latter, without discontinuities, by adhesive bonding upon vulcanisation. The element 12 has an annular form, as does the element 11, and is provided with a radially inner annular sealing lip 13 which extends radially and axially and projects from a preferably inner annular root portion 14 of the element 12 and is able to cooperate with respective sealing surfaces 15, 16 of a sealing seating 18 of known type of the inner ring 2; the lip 10 is integrally formed with the element 12, as also is the lip 13, and is disposed peripherally on the outside of the sealing assembly 8 in such a way that not only does it serve as a snap-engagement element of this latter onto the bearing 1, but also exercises in the seat 9 a sealing action between the ring 3 and the elements 11 and 12.

According to the invention, the lip 13 is shaped in such a way as to be able to exert on the seating 18 a double sealing action both in a radial direction and in an axial direction to achieve this new result (to exercise a double seal, both axial and radial, the known sealing assemblies in fact require the use of two different separate lips), the lip 13 is shaped in such a way as to define a toroidal bellows element having a radial section shaped substantially as a V the vertex of which is disposed obliquely with respect to the axis of the annular element 12 itself; such toroidal element is composed of two opposed conical annular body portions 20 and 21 having similar but different cone angles and disposed coaxially one behind the other joined along a perimeter of the narrow ends, which junction defines, in section, the said vertex of the V, and the body portions 20 and 21 are provided in proximity with the vertex of the V and on opposite sides with respect thereto, narrow ends, with a sealing edge 22 and a flat sealing surface 23 able to cooperate in forming a fluid-tight seal with the sealing surfaces 15 and 16 respectively of the seating 18. In particular the edge 22 is able to cooperate interferingly with and to slide with respect to the surface 15 which is oblique with respect to the axis of the bearing 1, whilst the surface 23 is able to cooperate radially with the surface 16 which is curved and defines in radial section an arc of a circle along which the body portion 21 is movable in a manner which will be explained below so that the body portion 21 defines with the seating 18, in dependence on the profile of the surface 16, a sliding radial interference seal (the profile designated in continuous section in Figure 1) or else a radial non-sliding labyrinth seal (profile indicated in broken outline in Figure 1).

Now making reference also to Figure 2, the lip 13 described above includes, according to the invention, two annular portions of reduced thickness, indicated respectively 25 and 26, formed respectively at the root portion 14 and the vertex of the V defined in radial section of the lip 13 in such a way as to divide the lip 13 into the said two conical body portions 20 and 21, and having a flexibility such as to connect the body portions 20 and 21 together and to the root portion 14 substantially in the manner of elastic hinges. In substance the reduced thickness portions 25 and 26 of the elastomeric lip 13 are able to define hinge axes of attachment of the body portions 20 and 21, indicated by two spots in Figure 2, in such a way as to allow relative rotation of the body portions 20 and 21 in consequence of stresses exerted on only one of the two. In particular, then, the body part 20 of the lip 13 projects from the portion 14 and is shaped in such a way as always to cooperate interferingly with the seat 18; consequently, therefore, following a rotation of the body 20 in the direction of the arrow (Figure 2) about the fulcrum constituted by the portion 25, for example because of the elastic deformation due to the interference created upon assembly and occurring between the edge 22 and the surface 15, a rotation of the body portion 21, in the opposite direction, is produced about the fulcrum constituted by the portion 26, such that the surface 23 is constrained to move, following the axial displacement of the edge 22, along an arc of a circle. Therefore, in use (Figure 2) whatever the magnitude of the interference between the corner 22 and the surface 15 of the seating 18, with the lip 13 undeformed, the interference between the surfaces 16 and 23 (or their mutual separation in the case of a labyrinth seal) will remain constant in that as soon as the edge 22, during assembly, touches the surface 15, the lip 13 deforms elastically with rotation of the body portion 20 and consequent rotation of the body portion 21 on the portion 26 along an arc of a circle parallel to that defined in section by the surface 16. Consequently, the contact pressure between the lip 13 and the seating 18 remains always constant, whatever the relative axial position between the assembly 8 and the seating 18 may be, or rather even in the presence of errors in mounting or of form of the seating 18. Moreover, if the edge 22 does not cooperate with the surface 15, again because of the possible errors of mounting or of form, the seal of the assembly 1 is not compromised in that, even if the axial sealing is less, there is always formed the radial sealing between the body portion 21 and the surface 16.

From what has been described the advantages connected with the invention will therefore be evident as will the fact that the same can be used even for different applications from that of bearings; more generally, in fact, it is clear that the sealing assembly of the invention can be introduced between any two members in relative rotation such as a shaft and the associated seat with equal functionality with respect to what has been described.

## Claims

1. A sealing assembly, in particular for a rolling element bearing, interposable between two members (2, 3) which are relatively rotatable with respect to one another, to ensure the fluid-tight sealing of the annular space (5) lying between them, comprising a substantially rigid support element (11) and an annular elastomeric sealing element (12) provided with a radially inner annular lip (13) extending radially and axially and projecting from an annular root portion (14) of the said elastomeric element (12), said annular lip (13) having a radial section formed substantially as a V having its vertex disposed obliquely with respect to the axis of the said elastomeric element and being subdivided into a first (20) and a second (21) body portion able to cooperate with respective sealing surfaces (15, 16) on one of the said members, characterized in that the said annular lip (13) includes two portions of reduced thickness (25, 26) a first of which is formed in correspondence with the said root portion (14), and a second of which is formed in correspondence with the said vertex of the V, the said portions of reduced thickness (25, 26) subdividing said annular lip (13) into said two body portions (20, 21) and having a flexibility such as to connect the said body portions (20, 21) together and to the said root portion (14) substantially as elastic hinges.

2. A sealing assembly according to Claim 1, characterized by the fact that the said annular lip (13) is shaped in such a way as to produce, following a rotation of the said first body portion (20) about the said first portion of reduced thickness (25), a rotation in the opposite sense of the said second body portion (21) about the said second portion of reduced thickness (26) in such a way as to make a radial sealing surface (23) of the the said lip formed on the said second body portion (21) move along an arc of a circle defined by a first of the said sealing surfaces (16) carried by one of the said members (2, 3).

3. A sealing assembly according to Claim 1 or Claim 2, characterized by the fact that the said first body portion (20) of the said annular lip (13) is provided in proximity with the said vertex of the V with a sealing edge (22) cooperable axially by sliding and with interference with a second of the said sealing surfaces (15) carried by one of the said members (2, 3).

**Patentansprüche**

1. Dicktungsvorrichtung, insbesondere für ein drehendes Stützelement, zwischen zwei Teile (2, 3) einführbar, die in Bezug aufeinander entsprechend drehbar sind, um die Abdichtung des ringförmigen Zwischenraumes (5) zu sichern, der zwischen ihnen liegt, bestehend aus einem grundsätzlich steifen Stützelement (11) und einem ringförmigen elastischen Dichtungselement (12), versehen mit einem radialen inneren ringförmigen Rand (13), der sich radial und axial ausdehnt und aus einem ringförmigen Wurzelteil (14) des besagten elastischen Elements (12) hervorsteht, besagter ringförmiger Rand (13) hat einen radialen Bereich, der grundsätzlich V-förmig ist und dessen Scheitelpunkt sich gezwungenermaßen in Bezug auf die Achsen des besagten elastischen Elements befindet und in einen ersten (20) und in einen zweiten (21) Körper unterteilt ist, in der Lage, mit den entsprechenden dichtenden Oberflächen (15, 16) auf einem der entsprechenden Elemente zusammernzuarbeiten, dadurch gekennzeichnet, daß der besagte ringförmige Rand (13) aus zwei Teilen von verminderter Stärke (25, 26) besteht, ein ersteres, das in Entsprechung zu besagtem Wurzelteil (14) geformt ist, und ein zweites, das in Entsprechung zum besagten Scheitelpunkt des V geformt ist, besagte Teile von verminderter Stärke (25, 26) unterteilen besagten ringförmigen Rand (13) in die beiden besagten Körper (20, 21) und sind so elastisch, daß sie besagte Körper (20, 21), grundsätzlich in der Art eines elastischen Gelenks, miteinander und mit dem besagten Wurzelteil (14) verbinden.

2. Dichtungs vorrichtung, nach Anspruch 1, dadurch gekennzeichnet, daß besagter ringförmiger Rand (13) in der Art gestaltet ist, daß er im folgenden eine Drehung des besagten ersten Körpers (20) auf dem besagten erstern Teil von reduzierter Stärke (25), eine Drehung in entgegengestztem Sinne zu besagtem zweiten Körper (21) auf besagtem zweiten Teil (26) von reduzierter Stärke, in der Art, daß eine radiale Dichtungsoberfläche (23) des besagten Randes entsteht, gebildet auf dem zweiten Besagten Körper (21), an einem Kreisbogen entlang, definiert durch eine erstere der dichtenden Oberflächen (16), von einem der besagten Teile (2, 3) getragen.

3. Dichtungs vorrichtung nach Anspruch 1 oder 2, dadurch gekennzeichnet, daß besagter erster Körper (20) des besagten ringfömigen Rands (13), ganz in der Nähe des besagten Scheitelpunkts des V, mit einem Dichtungsende (22) versehen ist, daß axial, durch gleitende Bewegung und durch Zusammenwirken, mit einer zweiten der besagten dichtenden Oberflächen (15) zusammenarbeitet, von einem der besagten Teile (2, 3) getragen.

**Revendications**

1. Un assemblage d'étanchéité, particulièrement pour un palier à éléments roulants, interposable entre deux éléments (2, 3) tournant relativement l'un par rapport à l'autre, pour assurer l'étanchéité aux fluides de l'espace annulaire (5) situé entre eux, comprenant un élément de support sensiblement rigide (11) et un élément d'étanchéité annulaire en élastomère (12), pourvu d'une lèvre annulaire intérieure radiale (13) s'étendant radialement et axialement et faisant saillie d'une partie de base annulaire (14) dudit élément en élastomère (12), ladite lèvre annulaire (3) ayant une section radiale sensiblement en V, dont le sommet est disposé obliquement par rapport à l'axe dudit élément en élastomère et étant subdivisée en une première (20) et une seconde (21) partie de corps aptes à coopérer avec les surfaces d'étanchéité respectives (15, 16) de l'un desdits éléments, caractérisé en ce que ladite lèvre annulaire (13) comprend deux parties d'épaisseur réduite (25, 26), dont la première est formée en correspondance avec ledit élément de base (14) et la seconde est formée en correspondance avec ledit sommet du V, lesdites parties d'épaisseur réduite (25, 26) subdivisant ladite lèvre annulaire (13) dans lesdites deux parties de corps (20, 21), et possédant une souplesse telle que lesdites parties de corps (20, 21) sont reliées ensemble et à ladite partie de base (14), sensiblement comme des articulations élastiques.

2. Assemblage d'étanchéité selon la revendication 1, caractérisé en ce que ladite lèvre annulaire (13) est conformée de façon à produire, après une rotation de ladite première partie de corps (20) autour de ladite première partie d'épaisseur réduite (25), une rotation dans le sens opposée de ladite seconde partie de corps (21) autour de ladite première partie d'épaisseur réduite (26), de manière à faire déplacer une surface d'étanchéité radiale (23) de ladite lèvre formée sur ladite seconde partie de corps (21) suivant un arc de cercle défini par une première desdites surfaces d'étanchéité (16) que porte l'un desdits éléments (2, 3),

3. Assemblage d'étanchéité selon la revendication 1 ou 2, caractérisé en ce que ladite première partie de corps (20) de ladite lèvre annulaire (13) est pourvue, au voisinage dudit sommet du V, d'un bord d'étanchéité (22) pouvant coopérer axialement par coulissement et avec interférence avec une seconde desdites surfaces d'étanchéité (15) que porte l'un desdits éléments (2, 3).

Fig.2

Fig.1